# EUROPÄISCHE PATENTSCHRIFT

(11) **EP 4 368 852 B1**
(45) Veröffentlichungstag und Bekanntmachung des Hinweises auf die Patenterteilung: **16.04.2025**
(21) Anmeldenummer: 22000247.1
(22) Anmeldetag: 14.11.2022
(51) Int. Cl.: F16D 69/02, C04B 41/89, C04B 41/87, C04B 41/52, C04B 41/00, C04B 111/00

(54) **VERFAHREN ZUR HERSTELLUNG VON REIBEINHEITEN**
METHOD FOR MANUFACTURING FRICTION UNITS
PROCÉDÉ DE FABRICATION D'UNITÉS DE FRICTION

(43) Veröffentlichungstag der Anmeldung: 15.05.2024
(73) Patentinhaber: REBRAKE Ceramic Brake Service GmbH, 82234 Wessling (DE)
(72) Erfinder: Liensdorf, Tom, D-Bindlach (DE)
(74) Vertreter: Keil & Schaafhausen Patentanwälte PartGmbB

(56) Entgegenhaltungen:
- CN-A- 113 045 324
- US-A1- 2008 143 005

## Beschreibung

Die vorliegende Erfindung betrifft ein Verfahren zur Herstellung von Reibeinheiten durch Beschichten eines Tragkörpers aus einem C/SiC-Werkstoff.

Die DE 44 38 455 C1 beschreibt ein Verfahren zur Herstellung einer Reibeinheit mit guten Kühleigenschaften zum reibenden Eingriff mit einem Gegenkörper, insbesondere zur Herstellung eines Brems- oder Kupplungskörpers. Es wird ein poröser Kohlenstoffkörper, der der Endkontur der Reibeinheit entspricht, bereitgestellt und die Poren dieses Kohlenstoffkörpers werden mit flüssigem Silizium infiltriert. Durch Einleiten einer chemischen Reaktion wird der Körper unter Bildung von Siliziumkarbid keramisiert. Vor der Silzium-Infiltration wird der poröse Kohlenstoffkörper so strukturiert, dass in definierten Innen- und/oder Außenbereichen Hohlräume und/oder Ausnehmungen zur Kühlung und/oder Versteifung der Reibeinheit gebildet werden, die nach der Keramisierung in ihrer Form und Größe beibehalten werden.

Die EP 2 058 546 B1 beschreibt ein Verfahren zur Herstellung von Reibscheiben, die einen Tragkörper und mindestens eine Reibschicht aufweisen. Die Reibschicht wird aus einem Siliziumkarbid-Schlicker, der Phenolharze, in einem Lösungsmittel gelöst, und einen Massenanteil im Feststoff des Schlickers von 0,1 % bis 10 % an Fasern oder Faserbündeln aus Kohlenstoff enthält, hergestellt. Als Lösungsmittel werden bevorzugt alkoholische Lösungen (C1- bis C4-Alkohole) oder deren Mischung mit Wasser zur Verdünnung der alkoholischen Lösung angegeben. Diese aus dem Schlicker hergestellte Reibschicht wird auf einen Tragkörper, der in Form eines Zylinderrings im CFK-Zustand vorliegt, aufgebracht. In einem Temperaturschritt wird die aus dem Schlicker hergestellte Reibschicht zunächst gehärtet. Im Anschluss folgt ein Pyrolyseschritt, bei dem das CFK in ein C/C überführt wird. Dieses C/C wird schließlich in einer weiteren Temperaturbehandlung mittels flüssigen Siliziums zu C/SiC umgewandelt.

Die CN 113847365 A beschreibt eine Kohlenstoff-Keramik-Bremsscheibe mit einem mehrschichtigen Aufbau der darauf ausgelegt ist, die thermischen Spannungen durch den Unterschied im thermischen Ausdehnungskoeffizienten zwischen der obersten SiSiC Reibschicht und dem Tragkörper auszugleichen. Als Tragkörper wird dabei C/C verwendet, der durch unterschiedlich zusammengesetzte Schlicker mehrfach beschichtet wird. Die verwendeten Schlicker bestehen aus Siliziumpartikeln, Harz (Binder), Siliziumkarbidpartikeln sowie der Schlicker für die oberste Reibschicht zusätzlich auch aus gehackten Kohlenstofffasern. Der flüssige Träger wird nicht spezifiziert. Aufgrund eines hohen Harzanteils von bis zu 70 Gew.-% wird das beschichtete C/C Kompositmaterial nach einer Vernetzung bei 160-220 °C anschließend bei Temperaturen von 800-1000°C pyrolysiert.

Die CN 111960860 A beschreibt die Herstellung einer verschleißbeständigen Si-SiC-Beschichtung auf der Oberfläche eines C/C-SiC-Bremsenmaterials. Die Beschichtung erfolgt hierbei jedoch auf C/C Kompositmaterial. Der dabei verwendete Schlicker besteht aus den pulverförmigen Feststoffen Kohlenstoff und SiC sowie einem flüssigen Träger aus einer wässrigen Lösung mit Polyvinylalkohol. Durch das PVA als Binderkomponente wird eine Temperaturbehandlung zwischen 160-300°C in Ar Atmosphäre benötigt. Anschließend wird die Beschichtung auf dem C/C Kompositmaterial in einer Flüssigsilizierung zur finalen SiSiC Reibschicht umgewandelt.

Die US 2014/0272249 A1 bezieht sich auf ein Verfahren, um beschädigte Bereiche in einem Keramik-Matrix-Komposit zu identifizieren und die beschädigten Bereiche zu reparieren, indem der beschädigte Bereich mit einem Schlicker aufgefüllt wird. Der Schlicker weist einen flüssigen Träger und ein Restaurierungsbeschichtungsmaterial auf. Als flüssiger Träger wird beispielsweise ein Lösemittel oder Wasser aufgeführt. Das Restaurierungsbeschichtungsmaterial besteht mindestens aus einem Binder, einem Dispergator, einem fugitiven Material oder einer Kombination aus solchen. Als fugitives Material werden Graphit oder allgemein Polymere vorgeschlagen. Das Restaurierungsbeschichtungsmaterial besteht beispielsweise außerdem aus mindestens einem Mullit, einem Seltenen-Erden-Silikat oder einem Seltenerd-Oxid sowie weiteren Materialien. In anderen Beispielen wird zur Erhöhung der Kohlenstoffausbeute die Verwendung eines Binders empfohlen, der zudem die Schlickerkomponenten bindet und potentiell in einem Hochtemperaturschritt mit den Binderkomponenten reagiert. Andere Beispiele schlagen die Zugabe von Additiven, wie Kohlenstoff (beispielweise Pulver, Nanotubes oder gehackte Fasern) vor. Weiterhin wird eine mögliche Zugabe diverser präkeramischer Polymere angeführt. Im speziellen wird auf die Verwendung von präkeramischen Polymeren und fugitiven Materialien eingegangen. In einer Temperaturbehandlung wird dabei das fugitive Material ausgebrannt und es wird durch die Reaktion mit anderen Bestandteilen eine Glasphase gebildet.

Die CN 113045324 A beschreibt ein Verfahren zum Reparieren und Recyclen einer zum Ende der Betriebszeit verschlissenen C/SiC-Bremsscheibe mittels eines Schlickers. Der Schlicker wird aus Alkohol, einem Harz, geschnittenen Fasern und Hexamethylentetramin hergestellt. Dieser Schlicker wird auf die Bremsscheibe nach Abschleifen der verschlissenen Oberfläche aufgebracht und einer Wärmebehandlung unterworfen. Anschließend wird die beschichtete C/C-SiC Bremsscheibe unter einer N₂ Atmosphäre bei 900 °C bis 1200 °C thermisch behandelt und in einem weiteren Temperaturschritt zwischen 1420 °C bis 1600 °C mit flüssigem Silizium infiltriert, um eine C/C-SiC Bremsscheibe mit reparierter Schicht zu erzeugen.

Die CN 106986664 A beschreibt ein Reparaturverfahren eines mit Kohlenstofffasern verstärkten Siliziumkarbid-Kompositmaterials. Der zu reparierende Bereich wird zunächst gereinigt. Die Reparatur des Defekts erfolgt mit Hilfe von auf den Defekt zugeschnittenen Kohlenstofffaserlagen, die mit einem Schlicker, bestehend aus dem präkeramischen Polymer Polycarbosilan und dem organischen Lösungsmittel Dimethylbenzene, imprägniert werden. Im Anschluss erfolgen die Trocknung und Sinterung. Wiederholende vakuumunterstützte Reinfiltrationen mit einer Mischung aus Polycarbosilan und Xylene sowie erneute Temperaturbehandlungen werden solange durchgeführt, bis die durch die Reinfiltration erzeugte Gewichtzunahme unterhalb 1 % liegt. Folglich werden präkeramische Polymere verwendet, um einen möglichst dichten Werkstoff zu erhalten und es muss wieder nachinfiltriert und thermisch behandelt werden. Es werden zudem Kohlenstoffgewebelagen, Binder und Lösungsmittel verwendet.

Die CN 111455375 A beschreibt ein weiteres Reparaturverfahren eines kohlestofffaserverstärkten Siliziumkarbid-Kompositmaterials. Der beschädigte Bereich wird mit einer Reparaturmischung aus Siliziumpulver, einem Anteil an Kohlenstoffpulver und einem Anteil an Siliziumkarbidpulver in einem Ethylalkohol-Lösungsmittel aufgefüllt und getrocknet. Der aufgefüllte Bereich wird anschließend lokal mittels eines CO₂ Lasers behandelt.

Der Erfindung liegt die Aufgabe zugrunde ein Verfahren bereit zu stellen, das eine einfache, schnelle und kostengünstige Wiederherstellung von verschlissenen oder defekten Reibschichten keramischer Tragkörper ermöglicht und auf einem Schlicker beruht, der frei von Lösungsmitteln, präkeramischen Polymeren oder Bindern ist.

Gelöst wird diese Aufgabe durch ein Verfahren mit den Merkmalen des Anspruchs 1. Bevorzugte Weiterbildungen des Verfahrens sind in den abhängigen Ansprüchen angegeben.

Das erfindungsgemäße Verfahren zur Herstellung von Reibeinheiten umfasst ein Beschichten von Tragkörpern aus einem C/SiC-Werkstoff mit einer Reibschicht aus SiSiC oder auch nur das Ausbessern von beschädigten Teilen einer solchen Reibschicht. Bei diesem Verfahren wird der zu beschichtende oder auszubessernde Tragkörper zunächst auf der zu bearbeitenden Oberfläche gereinigt. Dieser Reinigungsvorgang kann durch Schleifen oder abrasives Strahlen vorgenommen werden, um Rückstände und schwach angebundenes Tragmaterial zu entfernen. Dann wird ein auf Wasser basierender Schlicker, der Partikeln aus SiC und Kohlenstoff enthält, vorbereitet und auf den Tragkörper oder den beschädigten Bereich des Tragkörpers aufgebracht. Die Auftragung des Schlickers kann durch Pinseln, Sprühen, Gießen oder Tauchen erfolgen.

Dieser beschichtete Tragköper wird dann bevorzugt einer Trocknung bei Raumtemperatur von etwa 20 °C unterworfen, wodurch dem Schlicker das Wasser entzogen wird. Durch diese schonende Trocknung und durch eine definierte Zusammensetzung des Schlickers werden Risse in der Schicht vermieden. Dadurch entsteht gleichzeitig eine offene Porosität in der durch den Schlicker gebildeten Schicht. Dann folgt eine Hochtemperaturbehandlung des Tragkörpers mit der getrockneten, offenporösen und rissfreien Struktur. Risse werden durch einen angepassten, geringen Kohlenstoffanteil vermieden. Insbesondere werden hierbei Kohlenstoffpartikelgröße, SiC-Partikelgröße und der Feststoffanteil berücksichtigt. Die Beschichtung erfolgt unter Zuführung von flüssigem Silizium bei Temperaturen oberhalb von 1420 °C in die offene Porosität. Dieser Verfahrensschritt wird durchgeführt bis eine kohlenstofffreie Reibschicht, die ausschließlich aus SiC und Silizium gebildet ist, vorliegt. Für das Verfahren ist wesentlich, dass die Zusammensetzung des Schlickers derart gewählt ist, dass der SiC-Anteil (Volumenanteil) in der Reibschicht mindestens 70 Vol.- % beträgt, wobei der restliche Volumenanteil aus elementarem Silizium besteht. Die finale SiSiC-Reibschicht zeigt neben einer hohen Verschleißbeständigkeit auch eine ausgezeichnete Wärmeleitfähigkeit, was einen besonderen Vorteil für die Anwendung im Bereich von Bremsen darstellt.

Die fertige Reibschicht wird in der Regel durch eine abrasive Nachbearbeitung endbearbeitet. Durch ein endkonturnahes Vorschleifen im getrockneten Zustand kann der Endbearbeitungsaufwand reduziert werden.

Mit dem Verfahren können keramische Reibeinheiten einem Refurbishment, auch einem mehrfachen Refurbishment, unterzogen werden, was zu einer hohen Kostenersparnis bei der Wartung von keramischen Reibeinheiten, wie beispielsweise keramischen Bremsscheiben und keramischen Kupplungsscheiben, führt. Die Reibschichten solcher keramischen Scheiben können vollflächig oder auch nur im Bereich von lokalen Defekten instandgesetzt werden. Das Verfahren kann auch dazu eingesetzt werden, eine Reibschicht auf keramischen Tragkörpern zu erzeugen, die zuvor keine diskreten Reibschichten besaßen.

Besondere Vorteile des erfindungsgemäßen Verfahrens sind darin zu sehen, dass für die Verfahrensführung nur eine thermische Behandlung erforderlich ist, nämlich eine Hochtemperaturbehandlung, bei der das flüssige Silizium in die offene Porosität der herzustellenden Reibschicht zugeführt wird. Bei diesem Hochtemperaturschritt bildet sich die SiSiC Reibschicht aus, die durch die SiC-Bildung am Interface mit dem Tragkörper eine feste Verbindung eingeht, was zu einer sehr guten Haftung der Reibschicht führt.

Der auf Wasser basierende Schlicker ist frei von Lösungsmitteln, was die Handhabung erleichtert. Entscheidend ist zudem, dass kein Bindemittel benötigt wird. Dies hat den Vorteil, dass ein zusätzlicher Vernetzungs/Härtungsschritt und eine zusätzliche, zeitintensive Pyrolyse wegfallen.

Für die neue oder ausgebesserte Reibeinheit werden auch keine teuren Halbzeuge aus Kohlenstofffasern, wie Vlies, Gewebe oder Kurzfasern, eingesetzt. Weiterhin ermöglicht das erfindungsgemäße Verfahren die Realisierung von dicken Reibschichten von 2 mm in nur einem Bearbeitungsschritt. Es zeigt sich auch, dass eine rissfreie Trocknung selbst dicker Beschichtungen erreicht werden kann.

Da das erfindungsgemäße Verfahren im Gegensatz zu Verfahren nach dem Stand der Technik keine Vernetzungs- oder Pyrolyseschritte erfordert, verkürzt sich der Herstellungsvorgang der SiSiC-Reibschichten, verbunden mit einer erheblichen Energieeinsparung. Die mit dem erfindungsgemäßen Verfahren hergestellten Reibschichten und die entsprechenden Reibeinheiten sind kostengünstig verglichen mit Verfahren, die für die Herstellung der Reibschichten Kohlenstoffhalbzeuge und/oder präkeramische Polymere einsetzen. Besonders hervorzuheben ist die nach dem erfindungsgemäßen Verfahren herstellbare Schichtdicke der Reibschicht von bis zu 2 mm in einem Verfahrensschritt. Solche Schichtdicken erfordern nach dem Stand der Technik mehrfache Wiederholungen der einzelnen Beschichtungsvorgänge.

Bevor ein Tragkörper mit einer Reibschicht versehen wird oder bevor dessen Reibschicht aufgearbeitet wird, d. h. erneuert oder repariert wird, sollte vorzugsweise der Tragkörper durch einen abrasiven Abtrag gereinigt werden, um eine gute Anbindung der Reibschicht an den Tragkörper zu erzielen.

Um zu erreichen, dass sich eine Reibschicht ausbildet, in der das SiC homogen verteilt ist, sollten die SiC-Partikeln des Schlickers im Größenbereich von 1 µm bis 100 µm, bevorzugt im Größenbereich von 3 µm bis 50 µm, liegen.

Auch hat sich gezeigt, dass ein Schlicker, bei dem 50 % der SiC-Partikel eine mittlere Partikelgröße von 40 µm bis 50 µm, 25 % der SiC-Partikel eine mittlere Partikelgröße von 10 µm bis 15 µm und 25 % der SiC-Partikel eine mittlere Partikelgröße von 3 µm bis 5 µm aufweisen, zu besonders guten Eigenschaften der Reibschicht hinsichtlich der SiC-Partikelverteilung führt. Zumindest sollte eine bimodale Partikelgrößenverteilung, d.h. mindestens zwei Größenfraktionen, vorliegen, um einen möglichst hohen SiC-Anteil zu realisieren. Die Verwendung von mehreren Größenfraktionen unterstützt eine dichtere Partikelanordnung und wirkt sich zudem positiv auf die Trocknung aus. Es ist aber darauf zu achten, dass nicht zu feine Partikel eingesetzt werden. SiC-Partikel im Schlicker mit einer Größe < 3 µm führen nach dem Trocknen zu einer rissbehafteten Schicht. Den gleichen Effekt hat ein zu hoher Anteil der feinen SiC-Fraktion.

Der im Schlicker verwendete Kohlenstoff besteht bevorzugt aus Ruß mit einer mittleren Partikelgröße von 10 nm bis 25 nm, noch bevorzugter mit einer Partikelgröße von etwa 16 nm. Auch hier hat die Partikelgröße einen Einfluss auf das Trocknungsverhalten und sehr kleine Partikel von beispielsweise 10 nm können aufgrund ihrer in Summe hohen Oberfläche und der damit verbundenen schnelleren Trocknung zu Rissen in der Schicht führen.

Um zu erreichen, dass die Schlickerbestandteile eine homogene Suspension bilden, wird dem Schlicker Dispergator zugegeben. Der Anteil des Dispergators kann 1 Gew.-% bis 3 Gew.-%, bezogen auf den Feststoffgehalt im Schlicker, betragen, so dass sich hohe Feststoffgehalte realisieren lassen. Als Dispergator wird bevorzugt ein Anteil von 2 Gew.-% verwendet.

Besonders gute Eigenschaften der Reibschicht hinsichtlich Verarbeitbarkeit, Trocknungsverhalten und finale Zusammensetzung ergeben sich dann, wenn der Schlicker einen Feststoffgehalt von 60 Gew.-% bis 70 Gew.-% und einen Wasseranteil von 40 Gew.-% bis 30 Gew.-% aufweist. Ein solcher Schlicker weist eine sehr geringe Viskosität auf und lässt sich somit auch sehr gut im Sprühverfahren auftragen. Durch ein Vortrocknen des Schlickers kann zudem eine pastöse Reparaturmasse eingestellt werden, die sich ideal zur Ausbesserung von Defekten und zum Auftrag dicker Schichten eignet.

Bevorzugt setzt sich der Feststoffgehalt im Schlicker aus 85 Gew.-% bis 95 Gew.-% SiC-Partikeln und 15 Gew.-% bis 5 Gew.-% Kohlenstoff zusammen. Im Besonderen eignet sich ein Feststoffgehalt mit 90 Gew.-% SiC und 10 Gew.-% Kohlenstoff.

Das Verfahren lässt zu, dass der auf Wasser basierende Schlicker durch Aufpinseln, Aufsprühen, Eintauchen oder Gießen auf den Tragkörper aufgebracht werden kann, da der Schlicker eine niedrige Viskosität aufweist.

Nachdem der Tragkörper mit dem Schlicker beschichtet wurde, wird der Tragkörper einer Trocknung unterworfen, um dem Schlicker gezielt das Wasser zu entziehen und eine offene Porosität zu erzeugen. Eine solche Trocknung kann Energie einsparend auch unter Raumtemperatur erfolgen. Mit einer Trocknung einer bis zu 2 mm dicken Schlickerbeschichtung selbst unter Raumtemperatur bei etwa 20 °C ergibt sich eine optisch rissfreie Reibschicht. Es sollte jedoch auf die ausgewählten Anteile an SiC und C sowie die verwendeten Partikelgrößen geachtet werden derart, dass zu feine Partikel oder ein zu hoher Anteil davon die Rissbildungsneigung und damit die Tendenz zur Ablösung der getrockneten Schicht vom Tragkörper deutlich steigert.

Die getrocknete, offenporöse und rissfreie Beschichtung wird einer Hochtemperaturbehandlung unter Zuführung von flüssigem Silizium in die offene Porosität unterworfen. Die Hochtemperaturbehandlung unter Vakuum sollte bei Temperaturen von 1500 °C bis 1700 °C unter Zuführung von flüssigem Silizium in die offene Porosität erfolgen. Die Hochtemperaturbehandlung kann bei einer Maximaltemperatur Tₘₐₓ für eine Zeitdauer von 0,5 bis 2 Stunden durchgeführt werden, bis sich eine finale, kohlenstofffreie Reibschicht mit einem SiC-Anteil von mindestens 70 Vol.-% gebildet hat.

Soweit die Angabe "auf einem Wasser basierender Schlicker" verwendet wird bedeutet dies, dass ausschließlich Wasser als flüssiger Träger verwendet wurde und kein organisches Bindemittel zum Einsatz kam.

Die Erfindung wird nachfolgend anhand der Zeichnung näher erläutert. In der Zeichnung zeigen
Figur 1 ein Flussdiagramm mit den einzelnen Verfahrensschritten zur Durchführung des Verfahrens gemäß der Erfindung und
Figuren 2B bis 2C schematisch verschiedene Querschnitte von Reibeinheiten, deren Reibschichten mit dem erfindungsgemäßen Verfahren herstellbar sind, wobei Figur 2A eine Reibeinheit mit einem beidseitig mit einer Reibschicht versehenen Tragkörper darstellt, Figur 2B eine Reibeinheit mit einer auf der einen Seite aufgearbeiteten Reibfläche darstellt und Figur 2C eine Reibeinheit mit einer auf der einen Seite ausgebesserten Reibschicht zeigt.

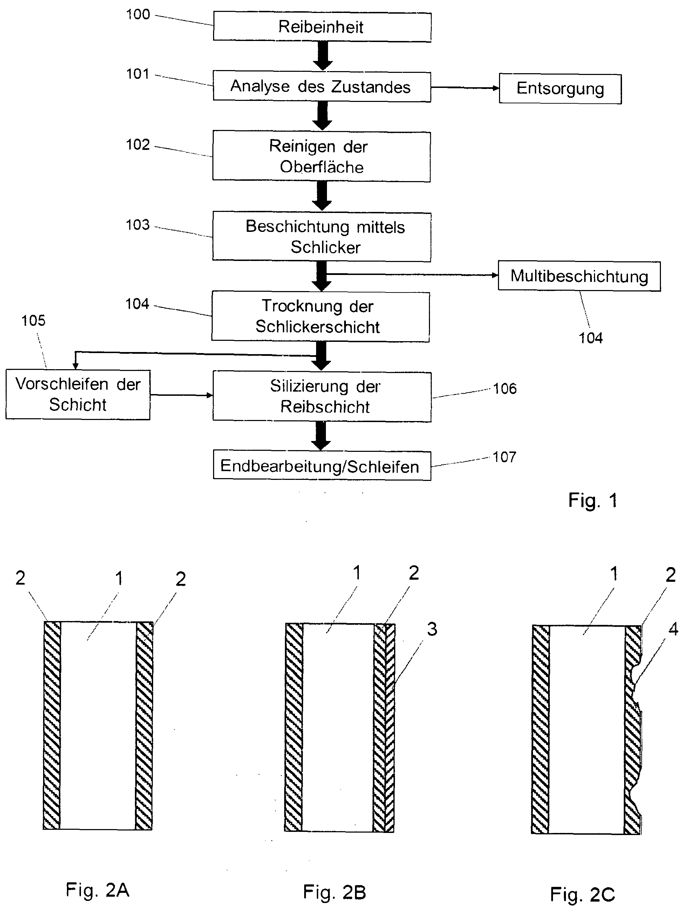

Wie der in Figur 1 dargestellte Verfahrensablauf zeigt, wird als Beispiel eine im Schritt 100 ausgewählte Reibeinheit im Schritt 101 einer Analyse des Zustands ihrer Reibfläche unterzogen. Diese Analyse kann ergeben, dass der Reibbelag oder der Trägerkörper der Reibeinheit irreparabel beschädigt sind, was zu einer Entsorgung der Reibeinheit führt.

Kommt im Schritt 101 die Analyse zu dem Ergebnis, dass der Reibbelag abgenutzt ist oder in einem lokalen Bereich eine reparable Beschädigung aufweist, dann wird im Schritt 102 die Oberfläche des Reibbelags gesamt oder lokal gereinigt. Diese Reinigung kann abrasiv mit Korund-Strahlen oder durch Abschleifen erfolgen. Dadurch wird zudem die Oberfläche angeraut, was die Kontaktfläche zwischen dem Schlicker und dem Tragkörper erhöht und zu einer besseren Haftung führt. Anschließend wird im Schritt 103 die gereinigte Oberfläche des noch vorhandenen Reibbelags mit einem zuvor zusammengestellten Schlicker, der gegebenenfalls der Zusammensetzung des noch vorhandenen Reibbelags angepasst ist, in einer solchen Dicke beschichtet, dass der abgenutzte Reibbelag wieder auf seine ursprüngliche Dicke gebracht wird. Aufgrund der niedrigen Viskosität des Schlickers werden die unebene Oberfläche oder lokale Defekte umfänglich benetzt.

Sollte ermittelt werden, dass die im Schritt 103 durchgeführte Beschichtung nicht zu der erforderlichen Dicke des Reibbelag führt, wird der Beschichtungsvorgang des Schritts 103, gegebenenfalls mehrfach, über den Schritt 104 wiederholt. Zwischen einzelnen Beschichtungsvorgängen über Schritte 104 kann eine zu bevorzugende Zwischentrocknung durchgeführt werden, indem der jeweils zuvor aufgebrachte Schlicker kurz angetrocknet wird, damit eine stabile Basis für den jeweils nachfolgenden Beschichtungsvorgang geschaffen wird. Es ist aber auch möglich, eine Beschichtung nass vorzunehmen.

Nachdem der Beschichtungsvorgang des Schritts 103 und gegebenenfalls des Schritts 104 abgeschlossen ist, wird die aufgebrachte Schlickerschicht einer Trocknung unter Umgebungstemperatur (ca. 20 °C) oder einer Zwangstrocknung bei einer Temperatur von bis zu 80°C unterworfen. Da der aufgebrachte, auf Wasser basierte Schlicker sehr gute Fließeigenschaften aufweist, ergibt sich nach der Trocknung eine ebene bzw. glatte Schicht. Falls die erzielte Oberfläche der getrockneten Schlickerschicht noch Unebenheiten aufweist, die nicht den anwendungspezifischen Vorgaben entsprechen, wird zu einem Schritt 105 übergegangen, in dem die Schlickerschicht vorgeschliffen wird. Falls die Schlickerschicht, die sich nach dem Schritt 104 ergibt, die Vorgaben an die Ebenheit erfüllt, wird, ohne ein Vorschleifen der Schicht im Schritt 105, zu dem Verfahrensschritt 106 übergegangen, in dem die Reibschicht einer Silizierung unterworfen wird. Für diesen Silizierschritt wird die beschichtete Reibeinheit unter Zugabe von Silizium bei Temperaturen oberhalb 1420 °C infiltriert. Das Silizium wird dabei über mindestens drei Kohlenstoffdochte in die Reibschicht eingeleitet, wobei es zur vollständigen Reaktion des Kohlenstoffs in der Reibschicht mit dem Silizium kommt, mit dem Resultat der Bildung von SiC. Die offene Porosität der Reibschicht wird dabei vollständig mit elementarem Silizium gefüllt. Beim Abkühlen der Reibschicht kommt es aufgrund der unterschiedlichen Ausdehnungskoeffizienten zwischen dem Tragkörper und der Reibschicht zu Zugspannungsrissen in der SiSiC-Reibschicht, die für Reibschichten auf C/SiC Werkstoffen typisch sind, aber die Haftung der Schicht nicht negativ beeinflussen. Nach der Silizierung wird im Schritt 107 die Reibschicht einer Endbearbeitung, beispielsweise durch einen Schleifvorgang, unterworfen.

In den Figuren 2A bis 2C sind verschiedene Möglichkeiten dargestellt, für die das erfindungsgemäße Verfahren eingesetzt werden kann.

Die Figur 2A zeigt den Querschnitt einer Reibeinheit, beispielsweise einer Bremsscheibe, mit einem Tragkörper 1, der beidseitig mit einem Reibbelag 2 beschichtet ist. Bei dem Tragkörper 1 handelt es sich um einen C/SiC-Werkstoff, das bedeutet, dieser besteht aus Kohlenstofffasern, die in einer Matrix aus Kohlenstoff, SiC sowie restlichem Silizium vorliegen. Der jeweilige Reibbelag 2 wird entsprechend dem nachfolgenden Beispiel 1 erhalten.

### Beispiel 1:

Zur Herstellung von Reibbelägen auf einen Tragkörper wird dessen Oberfläche zuerst auf Defekte hin überprüft. Darauf folgt ein abrasiver Reinigungsschritt mittels Korund-Strahlen, der zudem die Flächen anraut. Anschließend wird der Schlicker mittels Sprüh-, Tauch-, Gießverfahren oder dem Pinsel auf die Oberfläche gleichmäßig aufgetragen und getrocknet. Dies wird solange wiederholt, bis, abhängig vom jeweiligen Auftragsverfahren, die gewünschte Schichtdicke erzeugt ist. Die so beschichtete Reibeinheit kann nach dem Trocknen direkt in die Hochtemperaturbehandlung, bei der sich die Reibschicht unter Zuführung von flüssigem Silizium final bildet. Das flüssige Silizium wird mittels Kohlenstoffdochte direkt der Reibschicht angeboten. Eine mechanische Bearbeitung auf Endmaß kann z.B. durch Schleifen erfolgen.

Die Figur 2B zeigt eine Reibeinheit, bei der auf der einen Seite der Reibbelag 2 abgenutzt ist, so dass er gegenüber dem Reibbelag 2 der Figur 2A eine geringere Dicke aufweist. Aus diesem Grund wurde der in Figur 2B rechte Reibbelag 2 aufgearbeitet, indem die Oberfläche des verbliebenen Reibbelags 2 neu mit einer zusätzlichen Reibbelagsschicht 3 beschichtet wurde, um die ursprüngliche Dicke des Reibbelags 2 wieder herzustellen. Die Vorgehensweise hierfür ist in dem nachfolgenden Beispiel 2 angegeben.

### Beispiel 2:

Die Reibeinheit inklusive der Reibbeläge werden zunächst auf Verschleiß und Defekte hin überprüft. Bei verschlissenen Reibbelägen werden nun die gesamten Flächen der Reibbeläge abrasiv mittels Korund-Strahlen gereinigt und angeraut. Anschließend wird der Schlicker mittels Sprühverfahren auf die wiederherzustellende Oberfläche gleichmäßig aufgetragen und getrocknet. Dieses wird solange wiederholt bis die gewünschte Schichtdicke erzeugt ist. Die neu beschichtete Reibeinheit kommt nach dem Trocknen direkt in die Hochtemperaturbehandlung, bei der sich die Reibschicht unter Zuführung von flüssigem Silizium final bildet. Das flüssige Silizium wird mittels Kohlenstoffdochte direkt der Reibschicht zugeführt. Eine mechanische Bearbeitung auf Endmaß kann z.B. durch Schleifen erfolgen. Für das Sprühen eignet sich ein Schlicker mit etwas feineren SiC-Partikeln (z.B. 25% SiC-Partikel Anteil mit 3 µm) und minimal mehr Kohlenstoff (z.B. ≥ 10 Gew.-% im Feststoffanteil), da hier die Schichtdicken in der Regel deutlich kleiner 1 mm pro Auftrag ausfallen.

Die Figur 2C zeigt schematisch eine Reibeinheit, deren Reibbelag 2 auf der einen Reibfläche zwei Beschädigungen 4 aufweist. Solche Beschädigungen 4 einer Reibeinheit können entsprechend dem nachfolgenden Beispiel 3 ausgebessert werden.

### Beispiel 3:

Die Defekte auf dem Reibbelag der Reibeinheit werden zunächst identifiziert und analysiert. Der Reibbelag wird um den Defekt herum vor dem abrasiven Reinigen maskiert oder mit einer Schablone abgedeckt, so dass nur der Defektbereich bearbeitet wird. Durch das Korund-Strahlen werden lose Bestandteile aus dem Defektbereich entfernt und dieser angeraut. Anschließend wird der Schlicker lokal aufgebracht, wobei sich das Gießverfahren besonders eignet. Der aufgefüllte Bereich kann nach dem Trocknen direkt der Hochtemperaturbehandlung unterworfen werden, bei der sich die Reibschicht unter Zuführung von flüssigem Silizium final bildet. Dabei sollte durch einen Kohlenstoffdocht das Silizium direkt in den zu reparierenden Bereich eingeleitet werden. Durch eine mechanische Bearbeitung kann die Höhe des reparierten Defektes auf die Reibbelagshöhe angepasst werden.

Die Kohlenstoffdochte dienen neben der Einleitung der Siliziumschmelze auch zum Abstützen der Reibeinheit im Silizierprozess, so dass diese nicht direkt in der Schmelze liegt. Als Dochte eignen sich beispielsweise pyrolysierte Buchenholzstäbe oder Graphitfilz. Beides hat eine ausreichend hohe offene Porosität, um das flüssige Silizium bei Temperaturen oberhalb von 1420 °C der Reibschicht zuzuführen.

Für das Sprühen, Tauchen und Pinseln eignen sich Schlicker mit etwas feineren SiC-Partikeln, da hier die Schichtdicken in der Regel deutlich kleiner 1 mm pro Auftrag ausfallen. Der Feinanteil der kleinsten SiC-Fraktion kann hier einen mittleren Durchmesser von 3 µm aufweisen. Es werden hierzu drei SiC-Partikelfraktionen mit im Mittel 44,5 µm (50 % Anteil), 12,8 µm (25 % Anteil) und 3 µm (25 % Anteil) verwendet, die zusammen 90 % des Feststoffanteils stellten. Ein Kohlenstoffanteil von 10 Gew.- % sowie Kohlenstoffpartikel mit 16 nm sind dabei vorteilhaft. Ein Feststoffgehalt im Wasser basierten Schlicker von 66 Gew.-% ist zu empfehlen. Mit den genannten Auftragsverfahren lassen sich auch sehr dünne Schichten < 100 µm erzeugen.

Für das Gießen eignet sich ein Schlicker mit etwas größeren SiC-Partikeln (z.B. 25% SiC-Partikel Anteil mit 4,5 µm) und minimal weniger Kohlenstoff (z.B. ≤ 9 Gew.-% Feststoffanteil) als bei dem Sprühen. Durch das Gießen können in einem Durchgang etwa 2 mm dicke Schichten erzeugt werden, was sich im Besonderen zur Reparatur lokaler Defekte eignet. Damit es zu keinen Trocknungsrissen kommt, sollte der Kohlenstoffanteil bei 9 Gew.-% liegen und die Partikelgröße im Mittel nicht unter 16 nm betragen. Die feinste SiC-Partikelfraktion sollte einen mittleren Partikeldurchmesser von mind. 4,5 µm aufweisen. Verwendet werden drei SiC-Partikelfraktionen mit im Mittel 44,5 µm (50 % Anteil), 12,8 µm (25 % Anteil) und 4,5 µm (25 % Anteil), die zusammen 91 % des Feststoffanteils stellen. Ein Feststoffgehalt im Wasser basierten Schlicker von 65 Gew.-% ist dabei empfehlenswert. Auch ein Antrocknen des Schlickers bringt für einen dickeren Schichtauftrag mögliche Vorteile. Hierdurch können z.B. Kantenausbrüche modelliert werden, ohne dass der Schlicker von dem defekten Bereich läuft.

Über den Feststoffgehalt können zudem die Viskosität und der finale SiC-Anteil gesteuert werden. Ein niedrigerer Feststoffgehalt von z.B. 60 Gew.-% führt zu einer geringen Viskosität und zu höheren Volumenanteilen an Silizium in der Reibschicht. Dagegen kann mit einem höheren Feststoffanteil von beispielsweise 70 % die Viskosität der Schlicker und der SiC-Anteil der finalen Reibschicht erhöht werden. Bei einem zu hohen Kohlenstoffanteil und einer sehr feinen Partikelgröße lässt sich der Schlicker zu höheren Feststoffgehalten hin nicht homogenisieren.

## Patentansprüche

1. Verfahren zur Herstellung von Reibeinheiten durch Beschichten eines Tragkörpers aus einem C/SiC-Werkstoff, wobei der Tragkörper in einem ersten Schritt auf seiner zu beschichtenden Oberfläche gereinigt wird, danach ein auf Wasser basierender Schlicker, der Partikeln aus SiC und Kohlenstoff enthält, auf den Tragkörper aufgebracht wird, der so beschichtete Tragkörper einer Trocknung unterworfen wird, um dem Schlicker das Wasser zu entziehen und eine offene Porosität zu erzeugen, und anschließend der Tragkörper mit der getrockneten, offenporösen und rissfreien Beschichtung einer Hochtemperaturbehandlung unter Zuführung von flüssigem Silizium in die offene Porosität unterworfen wird, bis eine kohlenstofffreie Reibschicht, bestehend ausschließlich aus SiC und Silizium, gebildet ist, wobei die Zusammensetzung des Schlickers derart gewählt ist, dass der SiC-Anteil in der Reibschicht mindestens 70 Vol.-% beträgt.

2. Verfahren nach Anspruch 1, **dadurch gekennzeichnet, dass** der Tragkörper durch einen abrasiven Abtrag gereinigt wird.

3. Verfahren nach Anspruch 1 oder 2, **dadurch gekennzeichnet, dass** die SiC-Partikeln des Schlickers im Größenbereich von 1 µm bis 100 µm liegen.

4. Verfahren nach Anspruch 3, **dadurch gekennzeichnet, dass** die SiC-Partikel im Größenbereich von 3 µm - 50 µm liegen.

5. Verfahren nach Anspruch 4, **dadurch gekennzeichnet, dass** 50 % der SiC-Partikel eine mittlere Partikelgröße von 40 µm bis 50 µm, 25 % der SiC-Partikel eine mittlere Partikelgröße von 10 µm bis 15 µm und 25 % der SiC-Partikel eine mittlere Partikelgröße von 3 µm bis 5 µm aufweisen.

6. Verfahren nach einem der Ansprüche 1 bis 5, **dadurch gekennzeichnet, dass** der Kohlenstoff im Schlicker bestehend aus Ruß eine mittlere Partikelgröße von 10 nm bis 25 nm aufweist.

7. Verfahren nach Anspruch 6, **dadurch gekennzeichnet, dass** der Kohlenstoff aus Ruß eine Partikelgröße von etwa 16 nm enthält.

8. Verfahren nach einem der Ansprüche 1 bis 7, **dadurch gekennzeichnet, dass** der Schlicker einen Feststoffgehalt von 60 Gew.-% bis 70 Gew.-% und einen Wasseranteil von 40 Gew.-% bis 30 Gew.-% aufweist.

9. Verfahren nach einem der Ansprüche 1 bis 8, **dadurch gekennzeichnet, dass** der Feststoffgehalt im Schlicker aus 85 Gew.-% bis 95 Gew.-% SiC-Partikeln und 15 Gew.-% bis 5 Gew.-% Kohlenstoff gebildet wird.

10. Verfahren nach einem der Ansprüche 1 bis 9, **dadurch gekennzeichnet, dass** der Schlicker auf den Tragkörper durch Pinseln, Sprühen, Tauchen oder Gießen aufgebracht wird.

11. Verfahren nach einem der Ansprüche 1 bis 10, **dadurch gekennzeichnet, dass** der beschichtete Tragkörper einer Trocknung unterworfen wird, um dem Schlicker das Wasser zu entziehen und eine offene Porosität zu erzeugen.

12. Verfahren nach Anspruch 11, **dadurch gekennzeichnet, dass** die Trocknung unter Raumtemperatur erfolgt.

13. Verfahren nach einem der Ansprüche 1 bis 12, **dadurch gekennzeichnet, dass** die getrocknete, offenporöse und rissfreie Beschichtung einer Hochtemperaturbehandlung unter Zuführung von flüssigem Silizium in die offene Porosität unterworfen wird.

14. Verfahren nach Anspruch 13, **dadurch gekennzeichnet, dass** die Hochtemperaturbehandlung bei 1500 °C bis 1700 °C in Vakuum unter Zuführung von flüssigem Silizium in die offene Porosität vorgenommen wird.

15. Verfahren nach Anspruch 13 oder 14, **dadurch gekennzeichnet, dass** die Hochtemperaturbehandlung bei einer Maximaltemperatur Tₘₐₓ für eine Zeitdauer von 0,5 bis 2 Stunden durchgeführt wird, bis sich eine finale Reibschicht mit einem SiC-Anteil von mindestens 70 Vol.-% gebildet hat.

## Claims

1. A process for the production of friction units by coating a support body made of a C/SiC material, wherein the support body is cleaned on its surface to be coated in a first step, a water-based slurry containing particles of SiC and carbon is then applied to the support body, the support body thus coated is subjected to drying in order to remove the water from the slurry and to produce an open porosity, and then the support body with the dried, open-pored and crack-free coating is subjected to a high-temperature treatment with the introduction of liquid silicon into the open porosity, and then the support body with the dried, open-pored and crack-free coating is subjected to a high-temperature treatment with the addition of liquid silicon into the open porosity until a carbon-free friction layer consisting exclusively of SiC and silicon is formed, whereby the composition of the slurry being selected such that the SiC content in the friction layer is at least 70 by vol.-%.

2. Process according to claim 1, **characterized in that** the supporting body is cleaned by abrasive removal.

3. Process according to claim 1 or 2, **characterized in that** the SiC particles of the slurry are in the size range from 1 µm to 100 µm.

4. Process according to claim 3, **characterized in that** the SiC particles are in the size range from 3 µm to 50 µm.

5. Process according to claim 4, **characterized in that** 50 % of the SiC particles have an average particle size of 40 µm to 50 µm, 25 % of the SiC particles have an average particle size of 10 µm to 15 µm and 25 % of the SiC particles have an average particle size of 3 µm to 5 µm.

6. Process according to one of claims 1 to 5, **characterized in that** the carbon in the slurry consisting of carbon black has an average particle size of 10 nm to 25 nm.

7. Process according to claim 6, **characterized in that** the carbon from carbon black contains a particle size of about 16 nm.

8. Process according to one of claims 1 to 7, **characterized in that** the slurry has a solids content of 60 wt.% to 70 wt.% and a water content of 40 wt.% to 30 wt.%.

9. Process according to one of claims 1 to 8, **characterized in that** the solids content in the slurry is formed from 85% by weight to 95% by weight of SiC particles and 15% by weight to 5% by weight of carbon.

10. Process according to one of claims 1 to 9, **characterized in that** the slurry is applied to the supporting body by brushing, spraying, dipping or casting.

11. Process according to one of claims 1 to 10, **characterized in that** the coated support body is subjected to drying in order to remove the water from the slurry and produce an open porosity.

12. Process according to claim 11, **characterized in that** the drying takes place at room temperature.

13. Process according to one of claims 1 to 12, **characterized in that** the dried, open-pored and crack-free coating is subjected to a high-temperature treatment with liquid silicon being fed into the open porosity.

14. Process according to claim 13, **characterized in that** the high-temperature treatment is carried out at 1500 °C to 1700 °C in a vacuum with liquid silicon being fed into the open porosity.

15. Process according to claim 13 or 14, **characterized in that** the high-temperature treatment is carried out at a maximum temperature Tₘₐₓ for a period of 0.5 to 2 hours until a final friction layer with a SiC content of at least 70 vol-% has been formed.

## Revendications

1. Procédé, destiné à fabriquer des unités de friction par revêtement d'un corps porteur en une matière C/SiC, lors duquel, dans une première étape, l'on nettoie le corps porteur sur sa surface à revêtir, ensuite, l'on applique sur le corps porteur une barbotine à base aqueuse qui contient des particules de SiC et du carbone, puis l'on soumet le corps porteur ainsi revêtu à un séchage, pour extraire l'eau de la barbotine et créer une porosité ouverte et par la suite, l'on soumet le corps porteur pourvu du revêtement séché, à pores ouverts et exempt de fissures à un traitement à haute température sous apport de silicium liquide dans la porosité ouverte, jusqu'à ce qu'une couche de friction exempte de carbone, constituée exclusivement de SiC et de silicium soit formée, la composition de la barbotine étant sélectionnée de telle sorte que la proportion de SiC dans la couche de friction s'élève à au moins 70 % en volume.

2. Procédé selon la revendication 1, **caractérisé en ce que** l'on nettoie le corps porteur par une érosion abrasive.

3. Procédé selon la revendication 1 ou 2, **caractérisé en ce que** les particules de SiC de la barbotine se situent dans l'ordre de grandeur de 1 µm à 100 µm.

4. Procédé selon la revendication 3, **caractérisé en ce que** les particules de SiC se situent dans l'ordre de grandeur de 3 µm à 50 µm.

5. Procédé selon la revendication 4, **caractérisé en ce que** 50 % des particules de SiC présentent une taille moyenne des particules de 40 µm à 50 µm, 25 % des particules de SiC présentent une taille moyenne des particules de 10 µm à 15 µm et 25 % des particules de SiC présentent une taille moyenne des particules de 3 µm à 5 µm.

6. Procédé selon l'une quelconque des revendications 1 à 5, **caractérisé en ce que** le carbone dans la barbotine, constitué de suie présente une taille moyenne des particules de 10 nm à 25 nm.

7. Procédé selon la revendication 6, **caractérisé en ce que** le carbone de suie contient une taille moyenne des particules d'environ 16 nm.

8. Procédé selon l'une quelconque des revendications 1 à 7, **caractérisé en ce que** la barbotine présente une teneur en matières solides de 60 % en poids à 70 % en poids et une proportion d'eau de 40 % en poids à 30 % en poids.

9. Procédé selon l'une quelconque des revendications 1 à 8, **caractérisé en ce que** la teneur en matières solides dans la barbotine est formée de 85 % en poids à 95 % en poids de particules de SiC et de 15 % en poids à 5 % en poids carbone.

10. Procédé selon l'une quelconque des revendications 1 à 9, **caractérisé en ce que** l'on applique la barbotine sur le corps porteur par application au pinceau, vaporisation, immersion ou moulage.

11. Procédé selon l'une quelconque des revendications 1 à 10, **caractérisé en ce que** l'on soumet le corps porteur revêtu à un séchage, pour extraire l'eau de la barbotine et créer une porosité ouverte.

12. Procédé selon la revendication 11, **caractérisé en ce que** le séchage s'effectue à température ambiante.

13. Procédé selon l'une quelconque des revendications 1 à 12, **caractérisé en ce que** l'on soumet le revêtement séché, à pores ouverts et exempt de fissures à un traitement à haute température sous apport de silicium liquide dans la porosité ouverte.

14. Procédé selon la revendication 13, **caractérisé en ce que** l'on procède au traitement à haute température à de 1500 °C à 1700 °C sous vide, sous apport de silicium liquide dans la porosité ouverte.

15. Procédé selon la revendication 13 ou 14, **caractérisé en ce que** l'on réalise le traitement à haute température à une température maximale Tₘₐₓ sur une durée de 0,5 à 2 heures, jusqu'à ce qu'une couche de friction finale se soit formée, avec une proportion de SiC d'au moins 70 % en volume.
